# EUROPEAN PATENT APPLICATION

(11) **EP 4 714 802 A1**
(43) Date of publication of application: **25.03.2026**
(21) Application number: 25203198.4
(22) Date of filing: 18.09.2025
(51) Int. Cl.: B62D 35/00, B62D 37/02

(54) **A VARIABLE AERODYNAMIC DEVICE**

(30) Priority: 19.09.2024 GB 202413820
(71) Applicant: McLaren Automotive Limited, Woking, Surrey GU21 4YH (GB)
(72) Inventor: Algoo, Robin, GU21 4YH Woking (GB); Brookes, Thomas, GU21 4YH Woking (GB); Cross, Benjamin, GU21 4YH Woking (GB); Bray, Oliver, GU21 4YH Woking (GB)
(74) Representative: Slingsby Partners LLP

(57) **Abstract**

A variable aerodynamic device for attachment to a vehicle body, the device comprising: an aerodynamic wing configured to extend from a rear surface of the vehicle body; a first linkage pivotally coupled to the aerodynamic wing at a first end and configured to be coupled to the vehicle body at a second end; a first actuator connected to the first linkage at a first end and configured to be coupled to the vehicle body at a second end, the first actuator being configured to actuate the first linkage to move the aerodynamic wing over a range of distances relative to the vehicle body; a second linkage pivotally coupled to the aerodynamic wing at a first end and to the first linkage at a second end; and a second actuator connected to the second linkage at a third end of the second linkage so that, for any distance within the range of distances, the second actuator can actuate the second linkage so that a pitch angle of the aerodynamic wing can be varied.

## Description

This invention relates to an improved variable aerodynamic device for attachment to a vehicle body, and a vehicle comprising this device.

It is common for modern vehicles to be fitted with aerodynamic devices that act to improve downforce or to reduce drag forces that act on the vehicle whilst it is moving. These devices are typically located in regions where there is airflow over an exterior surface of the vehicle, so that they can vary the path of air over those regions of the vehicle. This variation to the airflow affects the aerodynamic performance of the vehicle.

The desired performance of aerodynamic devices may differ depending on the operating environment of the vehicle. For example, if the vehicle is being driven on an urban road in an unenthusiastic manner at low speeds, aerodynamic performance is not as important and there may be legislative constraints regarding the protrusion of aerodynamic devices from external surfaces of the vehicle. However, if the vehicle is to be driven on a racetrack, then these legislative constraints may not apply and, instead, there is a desire to increase aerodynamic performance to reduce vehicle lap time and/or increase vehicle stability to improve driver confidence in the vehicle. For sportscars, which are intended to be driven both on urban roads and on racetracks, it is desirable that the aerodynamic devices of these cars are adjustable so that they can comply both with the legislative requirements of on-road driving and the desired aerodynamic performance of racetrack driving.

An example of an aerodynamic device for a vehicle comprises a rear wing element. The rear wing element, in use, stands proud of the vehicle in at least some positions of the aerodynamic device so that air can flow on both sides of this element. One method for converting a vehicle from a road ready to a track ready state is to move the position of the rear wing element rearwards, which in turn increases the moment of the downwards force over the rear tyres of the vehicle.

According to a first aspect of the present invention there is provided a variable aerodynamic device for attachment to a vehicle body, the device comprising an aerodynamic wing configured to extend from a rear surface of the vehicle body; a first linkage pivotally coupled to the aerodynamic wing at a first end and configured to be coupled to the vehicle body at a second end; a first actuator connected to the first linkage at a first end and configured to be coupled to the vehicle body at a second end, the first actuator being configured to actuate the first linkage to move the aerodynamic wing over a range of distances relative to the vehicle body; a second linkage pivotally coupled to the aerodynamic wing at a first end and to the first linkage at a second end; and a second actuator connected to the second linkage at a third end of the second linkage so that, for any distance within the range of distances, the second actuator can actuate the second linkage so that a pitch angle of the aerodynamic wing can be varied.

The aerodynamic wing may comprise an upwardly facing aerodynamic surface configured to direct the flow of air as it passes the rear of the vehicle.

The aerodynamic wing may comprise a distal tip, and the first linkage may be connected to the aerodynamic wing at a location that is closer to the distal tip than the location at which the second linkage is connected to the distal tip.

The first linkage may comprise a wing support configured to be connected to the body of the vehicle at a first connection point, to a lower surface of the aerodynamic wing at a second connection point, and to the first actuator at a third connection point.

The wing support may be configured to be connected to the vehicle body at the first end by a first bracket.

The second linkage may comprise a first connecting member pivotally connected to the wing support at a first end; a second connecting member pivotally connected to the first connecting member at a first end, and pivotally connected to the second actuator at a second end; and a third connecting member pivotally connected to the first connecting member at a first end, and to a lower surface of the aerodynamic wing at a second end.

The first, second and third members may be struts.

The first connecting member may be connected to the wing support at a position along the length of the wing support that is located between the second connection point and the third connection point.

The aerodynamic wing may be moveable away from the second actuator to transition between a stowed configuration and a deployed configuration.

To move between the stowed configuration and the deployed configuration, the first linkage may rotate distally of the second actuator.

The aerodynamic wing may be further moveable to a first further configuration and, in the first further configuration, the aerodynamic wing may be configured to extend the flow of air passing over upper surfaces of the vehicle.

To move between the deployed configuration and the first further configuration, the second actuator may be extended.

The aerodynamic wing may be further movable to a second further configuration and, in the second further configuration, the aerodynamic wing may be configured to divide the flow of air passing over upper surfaces of the vehicle.

To move between the deployed configuration and the second further configuration, the second actuator may be retracted.

The device may further comprise a second bracket configured to allow the variable aerodynamic device to rotate relative to the vehicle body.

The aerodynamic wing may have a width that extends along its axis of rotation, and the first and second linkages may be located at a first end of the aerodynamic wing along its width. The device may further comprise a third linkage pivotally coupled to a second end along the width of the aerodynamic wing at a first end and to the vehicle body at a second end; and a third actuator connected to the third linkage at a first end and to the vehicle body at a second end, the third actuator being configured to actuate the third linkage to move the aerodynamic wing over a range of distances relative to the vehicle body; a fourth linkage pivotally coupled to a second end along the width of the aerodynamic wing at a first end and to the third linkage at a second end; and a fourth actuator connected to the second linkage at a third end so that, for any distance within the range of distances, the fourth actuator can actuate the fourth linkage so that the pitch angle of the aerodynamic wing can be varied.

The device may further comprise a first control unit configured to control the first and second actuators and a second control unit configured to control the movement of the third and fourth actuators.

The first and second actuators may be hydraulic rams.

The first actuator may be driven by a first motor and the second actuator may be driven by a second motor.

The third actuator may be driven by a third motor and the fourth actuator may be driven by a fourth motor.

The first and second motors may be driven by a Controller Area Network (CAN) bus.

There may be provided a vehicle comprising the device.

According to a second aspect of the present invention there is provided a vehicle comprising a rear diffuser and an aerodynamic wing with an aerodynamic surface, the aerodynamic wing being configured to move between a stowed and deployed configuration, wherein the aerodynamic wing comprises a lower aerodynamic surface that is configured to extend a continuous flow of air outwardly from underneath the rear diffuser.

To move between the stowed and the deployed configuration, the aerodynamic wing may be moved rearwardly with respect to the body of the vehicle.

To move between the stowed and the deployed configuration, the aerodynamic wing may be moved upwardly with respect to the body of the vehicle.

The pitch of the aerodynamic wing, and the distance between the aerodynamic wing and the vehicle body, may be varied in dependence on one or more driving conditions for the vehicle.

The present invention will now be described by way of example with reference to the accompanying drawings. In the drawings:
Figure 1 illustrates a schematic diagram of a vehicle.
Figure 2 illustrates an isometric view of the rear of the vehicle of figure 1.
Figure 3 illustrates a first cross-sectional view of an aerodynamic device comprising the aerodynamic wing of figure 2.
Figure 4 illustrates a second cross-sectional view of an aerodynamic device comprising the aerodynamic wing of figure 2.
Figure 5 illustrates a third cross-sectional view of an aerodynamic device comprising the aerodynamic wing of figure 2.
Figure 6 illustrates a fourth cross-sectional view of an aerodynamic device comprising the aerodynamic wing of figure 2.
Figure 7 illustrates a first cross-sectional view of the flow of air over the rear external surfaces of a vehicle.
Figure 8 illustrates a second cross-sectional view of the flow of air over the rear external surfaces of a vehicle.

The following description is presented to enable any person skilled in the art to make and use the invention and is provided in the context of a particular application. Various modifications to the disclosed embodiments will be readily apparent to those skilled in the art.

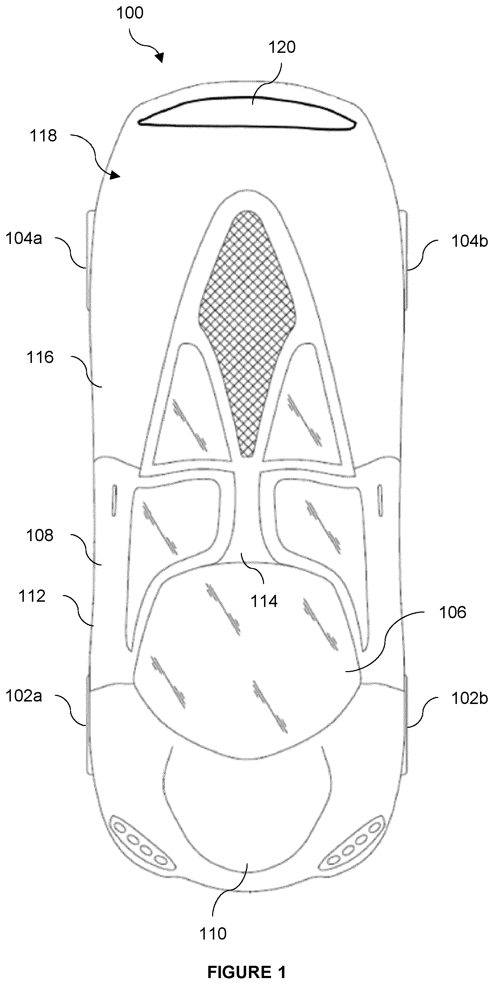

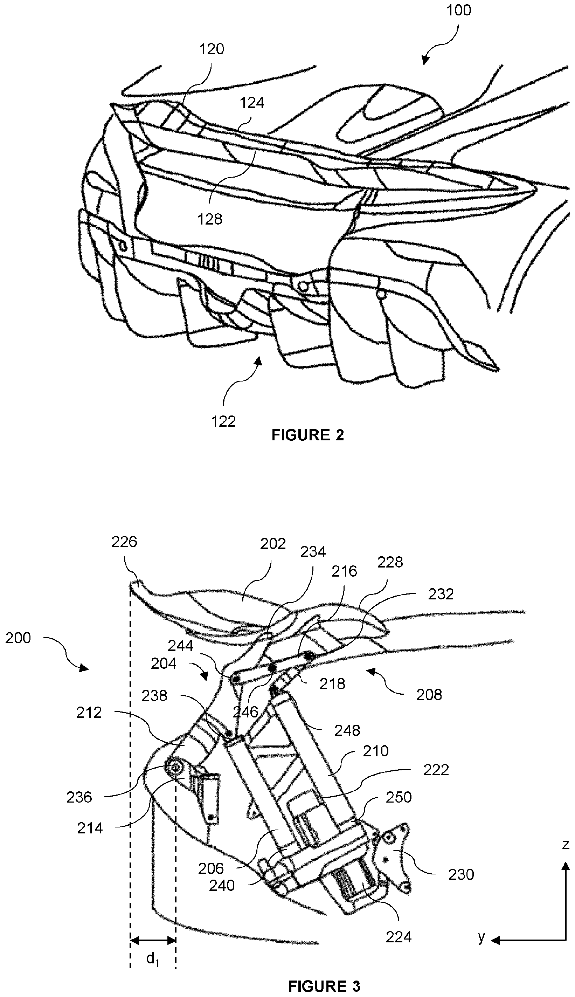

Figures 1 and 2 illustrate a vehicle 100. The vehicle 100 may be a car. The vehicle 100 may comprise one or more front wheels 102a, b and one or more rear wheels 104a, b. In the specific example of figure 1 the vehicle 100 comprises two front wheels 102a, b and two rear wheels 104a, b. The front of the vehicle 100 is defined with reference to the primary motion direction of the vehicle 100. The front of the vehicle 100 points in the primary motion direction of the vehicle 100. Generally, a vehicle 100 has a primary motion direction that is the forward direction. The vehicle 100 comprises an occupant compartment 106. The occupant compartment 106 may comprise one or more seats for occupants of the vehicle 100 to sit in. The occupant compartment 106 may accommodate a driver of the vehicle 100. The occupant compartment 106 may accommodate one or more passengers. The vehicle 100 may comprise controls located within the occupant compartment 106 to enable an occupant to control the motion of the vehicle 100.

The vehicle 100 comprises a vehicle body 108. The vehicle body 108 comprises a plurality of body panels. For example, the body panels may include bonnet panel(s) 110, side door panel(s) 112, roof panel(s) 114, and rear deck panel(s) 116. Each of these listed example areas of body panels may be formed of one or more body panels.

The vehicle 100 comprises one or more variable aerodynamic devices (VADs). As shown in figure 1, the vehicle 100 comprises a rear VAD 120. The rear VAD 120 is mounted to the vehicle 100. The rear VAD 120 is mounted at a rear portion of the vehicle body 108. The vehicle body 108 may be the collection of parts that form the main structure of the vehicle 100. The rear VAD 120 may be resiliently deformable between the lowered position and the raised position. Resiliently deformable means that the VAD is configured to be moveable between the lowered and raised positions without failure to the material that forms the VAD. (E.g., cracking, or permanent deforming over a normal lifetime of the part.) In figures 1 and 2, the VAD 120 comprises an aerodynamic wing. As it is located at the rear of the vehicle 100, the aerodynamic wing may be referred to as a rear wing. The terms aerodynamic wing 202 and rear wing may be used interchangeably herein.

The rear of the vehicle 100 is illustrated in detail in figure 2. The aerodynamic wing 120 has aerodynamic surfaces that act to improve downforce or to reduce drag forces that act on the vehicle 100 whilst it is moving. The aerodynamic wing 120 may have an upwardly facing aerodynamic surface 124 that is configured to enhance the flow of air over the top of the vehicle 100 as it passes the rear of the vehicle 100. The upper aerodynamic surface 124 of the wing 120 may be configured to provide a continuous flow of air over the rear of the vehicle 100. The upper aerodynamic surface 124 of the wing 120 may be a smooth surface that allows air to flow uninterrupted over it. The aerodynamic wing 120 may also have a lower aerodynamic surface 128 that is configured to enhance the flow of air emerging from the underside of the vehicle 100. The lower aerodynamic surface 128 may be configured to create an area of lower pressure on the underside of the wing 120, which creates a downforce and thereby increases vehicle 100 stability. The lower aerodynamic surface 128 may be a smooth surface that allows air to flow uninterrupted over it.

The rear of the vehicle 100 further comprises a rear diffuser 122. The rear diffuser 122 is shaped to decelerate a rearwardly moving airflow from underneath the vehicle 100 that is exiting at the rear of the vehicle 100 and direct the air to expand into the region directly behind the vehicle 100. The assistance in the expansion of the air behind the vehicle 100 reduces drag on the vehicle 100. In addition, the rear diffuser 122 helps increase downforce by assisting the flow of air under the vehicle 100 by giving the flow of air a less impeded exit from behind the vehicle 100. The rear diffuser 122 can comprise a plurality of aerodynamic elements such as channels and wings.

A cross-sectional view of a VAD 200 comprising the aerodynamic wing 202 of figure 2 is illustrated in figure 3. The aerodynamic wing 202 is referenced in figure 2 by numeral 202. As described above, the aerodynamic wing 202 is designed to affect vehicle 100 aerodynamics. The aerodynamic wing 202 may comprise curved upper and lower surfaces as such surfaces help to guide the flow of air over the wing 202. The aerodynamic wing 202 is shaped as an aerofoil in a cross-section. The aerodynamic wing 202 may have a teardrop shape. The wing 202 may have a rounded leading edge and may narrow along its length to form a distal tip 226 at its trailing edge. The aerodynamic wing 202 is configured to extend from a rear surface of the vehicle body 108. A rear surface of the vehicle 100 is defined relative to the direction of forward motion of the vehicle 100. Whilst it is configured to extend from a rear surface, the aerodynamic wing 202 may alternatively extend from any suitable surface of the vehicle 100 such as a side panel or the front of the vehicle 100.

The aerodynamic wing 202 is coupled to one or more mechanisms that are configured to adapt the configuration of the wing 202. The configuration of the wing 202 is defined in part by the distance between the wing 202 and a reference point. The distance may be defined along a longitudinal axis y. The longitudinal axis y extends horizontally along the length (or longest dimension) of the vehicle 100 when the vehicles' wheels are on the ground. The configuration of the wing 202 is also defined by a pitch angle of the wing 202 with respect to a reference axis. The configuration of the wing 202 may comprise alternative orientational and/or positional parameters. The one or more mechanisms of the VAD 200 are therefore configured, in combination, to adapt at least the distance and the pitch angle of the wing 202. The pitch angle may otherwise be called the angle of attack. The pitch angle be defined as an angle between the longitudinal axis y and the chord line of the wing 202. The chord line of the wing 202 is an imaginary line joining the leading edge and the trailing edge of an aerofoil. The length of the wing 202 may be defined as the distance between the proximal end 228 of the wing 202 and the distal tip 226 (or trailing edge) of the wing 202.

A first mechanism of the VAD 200 comprises a first linkage 204. A linkage may be a system of connecting structures that may act in combination to adapt the configuration of a device. The first linkage 204 of the VAD 200 is pivotally coupled to the aerodynamic wing 202 at a first end 234. The first linkage 204 may be coupled to the underside of the aerodynamic wing 202. The underside of the aerodynamic wing 202 is the lower surface of its aerofoil cross-section. The first linkage 204 may be connected to a distal portion of the underside of the wing 202. The distal portion of the wing 202 is the portion that comprises the distal tip 226, or trailing edge, of the wing 202. The first linkage 204 may be connected to a middle portion of the wing 202, along the lower surface of its aerofoil. That is, the first linkage 204 may be connected to the wing 202 at a portion that is located between the distal tip 226 and the proximal end 228 (or leading edge) of the wing 202 along its chord line. The first linkage 204 may control the distance of the wing 202 from a reference point because it is connected to a middle portion of the wing 202 and so is able to evenly direct its aerofoil along a longitudinal axis y without causing rotation of the wing 202 relative to a vertical axis z.

A pivotal coupling is one that connects two or more mechanical components together about a common axis so that those components can rotate relative to each other about the axis. The first linkage 204 comprises at least one component that is pivotally coupled to the aerodynamic wing 202 about a common axis. The first linkage 204 is also configured to be coupled to a vehicle body 108 at a second end 236. As with its coupling to the aerodynamic wing 202, the first linkage 204 may be configured to be pivotally coupled to a vehicle body 108.

The first mechanism of the VAD 200 further comprises a first actuator 206. The first actuator 206 is configured to actuate the first linkage 204. That is, the first actuator 206 is configured to impart motion to the first linkage 204 and to cause the first linkage 204 to move because of that imparted motion. The first actuator 206 is connected to the first linkage 204 at a first end 238 of the first actuator 206. The first actuator 206 is connected to the first linkage 204 at a first portion on the first linkage 204. The first portion may be in a middle portion of the first linkage 204. The middle portion of the first linkage 204 is located between the first and second ends 234, 236 of the first linkage 204. The connection of the first actuator 206 to a middle portion of the first linkage 204 allows the first actuator 206 to impart motion to the first linkage 204 without causing unwanted rotation of the first linkage 204. The first portion may be in any alternative location along the first linkage 204. The first actuator 206 is configured to be coupled to the vehicle body 108 at a second end 240 of the first actuator 206. The first and second ends of the first actuator 206 may oppose each other. That is, each of the first and second ends of the first actuator 206 may be located a respective end along the length of the first actuator 206. In other words, the length of the first actuator 206 may extend between the first end 238 and the second end 240 of the actuator. The actuator may be coupled at its second end 240 to a power source that imparts power to the actuator to cause the actuator to move.

The first actuator 206 is configured to actuate the first linkage 204 in order to move the aerodynamic wing 202 over a range of distances relative to the vehicle body 108. That is, the first actuator 206 is configured, by way of the first linkage 204, to cause the aerodynamic wing 202 to move relative to a reference point. The distance between the aerodynamic wing 202 and the reference point may be measured along the longitudinal axis y. The first actuator 206 may be a linear actuator. This means that the actuator can extend and retract along an axis to move the first linkage 204.

A second mechanism of the VAD 200 comprises a second linkage 208. The second linkage 208 is pivotally coupled to the aerodynamic wing 202 at a first end 242 of the second linkage 208. That is, at a first end 242 the second linkage 208 comprises at least one component that can rotate relative to the aerodynamic wing 202 about a common axis. The second linkage 208 is also pivotally coupled to the first linkage 204 at a second end 244 of the second linkage 208. That is, the second linkage 208 comprises at least one component that can rotate relative to the first linkage 204 about a common axis.

The first linkage 204 of the VAD 200 is connected to the aerodynamic wing 202 at a location that is closer to the distal tip 226 of the wing 202 than the location at which the second linkage 208 is connected to that distal tip 226. This means that, when the wing 202 is attached to the rear of the vehicle 100, the first linkage 204 of the VAD 200 is located rearwardly of the second linkage 208.

The second mechanism of the VAD 200 further comprises a second actuator 210. The second actuator 210 is connected to the second linkage 208 at a third end 242 of the second linkage 208. The second actuator 210 is configured to actuate (or impart motion to) the second linkage 208. The second actuator 210 is connected to the second linkage 208 at a first end 248 of the second actuator 210. The second actuator 210 is configured to be coupled to a vehicle body 108 at a second end 250 of the second actuator 210. The first and second ends 248, 250 of the second actuator 210 may oppose each other. The length of the second actuator 210 may extend between the first end 248 and the second end 250 of the actuator. The second actuator 210 may be coupled at its second end 250 to a power source that imparts power to the actuator so that the actuator can, in turn, impart motion to the second linkage 208. The first actuator 206 may be located closer to the distal tip 226 of the wing 202 than the second actuator 210. Thus, when the wing 202 is attached to the rear of the vehicle 100, the first actuator 206 of the VAD 200 may be located rearwardly of the second actuator 210.

The second actuator 210 is configured to actuate the second linkage 208 so that the second linkage 208 can act to vary the pitch angle of the aerodynamic wing 202. That is, the second actuator 210 is configured to cause the second linkage 208 to vary the angle of the chord line of the aerodynamic wing 202 with respect to the longitudinal axis y. The second actuator 210 is configured so that, for any distance within the range of distances, the pitch angle of the aerodynamic wing 202 can be varied. More specifically, as described in further detail below, the pitch angle of the wing 202 can be varied by varying the difference in extension between the second actuator 210 and the first actuator 206. The second actuator 210 may be a linear actuator. This means that the actuator can extend and retract along an axis to move the second linkage 208.

The reference point that may be used to define the configuration of VAD 200 components may be defined with respect to the VAD 200 itself. In one example, the reference point is defined by the second actuator 210. More specifically, the components of the VAD 200 may be defined with respect to the second end 250 of the second actuator 210. With respect to the second end 250 of the second actuator 210: when a component is described as moving proximally, this means that it is moving closer to the second actuator 210. Equally, when a component is described as moving distally, this means that it is moving further away from the second actuator 210.

The first linkage 204 of the VAD 200 may comprise a wing support 212. A wing support 212 may be defined as a component that carries at least a portion of the load of the aerodynamic wing 202 when the wing 202 is attached to the body of the vehicle 100. The wing support 212 may be configured to connect to the body of a vehicle 100 at a first connection point. The wing support 212 may be connected to the underside, or lower surface, of the aerodynamic wing 202 at a second connection point. The wing support 212 may therefore extend away from the lower surface of the wing 202. The wing support 212 may be connected to the lower surface of the wing 202 at the first end 234 of the first linkage 204. The wing support 212 may be further connected to the first actuator 206 at a third connection point so that the first actuator 206 is able to actuate the support. The wing support 212 is a rigid wing support 212.

The VAD may comprise a first bracket 214 located at its distal end. The wing support 212 may be configured to be connected to the vehicle body 108 at one end 236 by the first bracket 214. A bracket is a support for holding an object against a fixed surface. The first bracket 214 may be pivotally coupled to the wing support 212. That is, the first bracket 214 may allow the wing support 212 to rotate relative to the bracket about an axis shared by the bracket and the wing support 212. The first bracket 214 may be configured to be both linearly and rotationally fixed to the body of the vehicle 100. The first linkage 204 may comprise further components in addition to the wing support 212 and the first bracket 214. The wing support 212 may extend the width of the aerodynamic wing 202, where the width of the wing 202 extends in a direction that is transverse to both the longitudinal axis y and the vertical axis z. The width of the wing may extend along the axis of rotation of the wing. The wing support 212 may be a planar component. That is, the wing support 212 may be substantially flat, such that its width is significantly smaller than its height and its length. The wing support 212 may be located at a first side along the width of the aerodynamic wing 202.

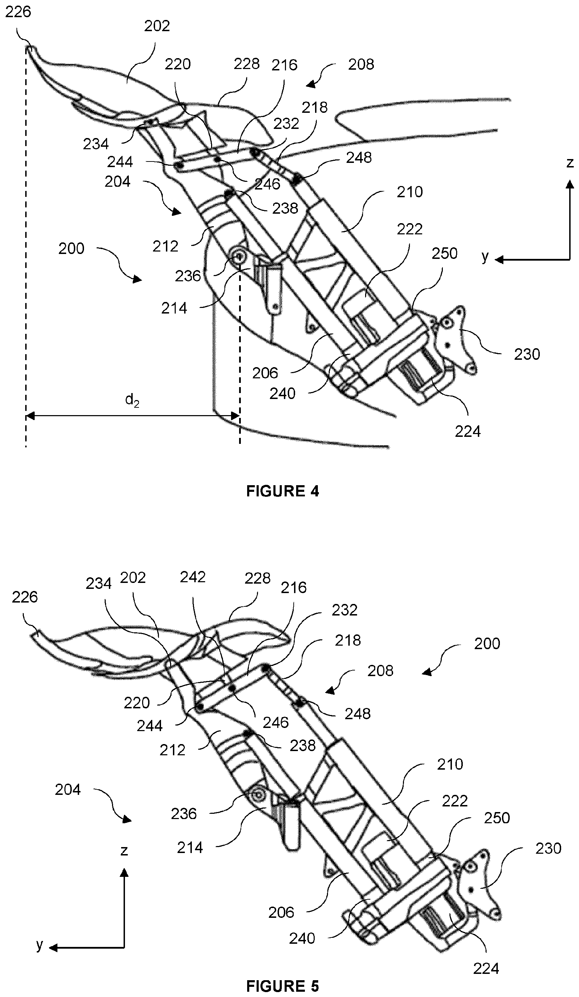

The second linkage 208 may further comprise first, second and third connecting members that, together, connect the aerodynamic wing 202 to the body of the vehicle 100. As mentioned above, the second linkage 208 may be pivotally connected to the wing support 212 at a second end. This means that the second linkage 208 may be rotationally coupled to the wing 202. The first connecting member 216 of the second linkage 208 may be connected to the first linkage 204 at a first end. The first end of the first connecting member 216 may be the same as the first end 244 of the first linkage. More specifically, the first connecting member 216 may be connected to the wing support 212 of the first linkage 204 at the first end of the first connecting member 216. The first connecting member 216 of the second linkage 208 may be connected to a second connecting member 218 of the second linkage 208 at a second end 232 of the first connecting member 216. The second connecting member 218 may be pivotally connected to the first connecting member 216 at a first end of the second connecting member 218. The first end of the second connecting member 218 may overlap along its rotational axis with the second end 232 of the first connecting member. The second connecting member 218 may also be pivotally connected to the second actuator 210 at a second end of the second connecting member 218. The second end of the second connecting member 218 may overlap with the first end 248 of the second actuator. The third connecting member 220 (as visible from figures 4 to 6) may be pivotally connected to the first connecting member 216 at a first end 246 of the third connecting member 220. The first end 246 of the third connecting member 220 may be connected to a middle portion of the first connecting member 216. That is, the third connecting member 220 may be connected to a portion of the first connecting member 216 that is located between the first and second ends of the first connecting member 216.

As mentioned above, the third connecting member 220 may be connected to the aerodynamic wing 202 at its second end. The third connecting member 220 may be connected to a surface of the aerodynamic wing 202 at a second end of the third connecting member 220. The second end of the third connecting member 220 may be the same as the third end 242 of the second linkage 208. The surface of the aerodynamic wing 202 may be the lower surface of the wing 202. The third connecting member 220 may be connected to the aerodynamic wing 202 at a proximal end 228 of the wing 202. The third connecting member 220 may be connected to the aerodynamic wing 202 at a position on the wing 202 that is further from the distal tip 226 of the wing 202 than the position at which the first linkage 204 is connected to the wing 202. In other words, the third connecting member 220 may be coupled to the wing 202 proximally of the first linkage 204. The third connecting member 220 (and, by extension, the second linkage 208) controls the configuration of the proximal end 228 of the wing 202. The third connecting member 220 (and, by extension, the second linkage 208) controls rotation of the wing 202 because it is connected to the proximal end 228 of the wing 202 and therefore enables the proximal end 228 of the wing 202 to pivot relative to the distal end.

The first, second and third members of the second linkage 208 may be struts. A strut is a structural component that resists longitudinal compression. Thus, the first, second and third members may be highly resistant to compressive forces.

The first connecting member 216 may be connected to the first linkage 204 at its first end 244 and to the second connecting member 218 at its second end 232. The second connecting member 218 may be connected to the first connecting member 216 at its first end 232 and to the second actuator 210 at its second end 248. As it is connected to the first linkage 204, the first connecting member 216 is moved when the first linkage 204 moves. The first connecting member 216 also moves when the second connecting member 218 moves. Movement of the second connecting member 218 is actuated by the second actuator 210. The third connecting member 220 is connected to the first connecting member 216. The third connecting member 220 may be connected to a middle portion of the second connecting member 218. The middle portion of the second connecting member 218 may be located between the first and second ends of the second connecting member 218. The third connecting member 220 may be fixed, both longitudinally and rotationally, to the first connecting member 216. The third connecting member 220 may alternatively be pivotally coupled to the first connecting member 216. As it is connected to the first connecting member 216, the third connecting member 220 can be moved by the first connecting member 216.

The first connecting member 216 may be connected to the first linkage 204 at a position along the length of the first linkage 204 that is in the middle of the wing support 212, or between its first end 234 and its second end 236. That is, the first connecting member 216 may be connected to the wing support 212 at a position along the length of the wing support that is located between the second connection point and the third connection point on the wing support 212.

The aerodynamic wing 202 may be moveable between a stowed configuration and a deployed configuration relative to a vehicle body 108. In a stowed configuration the wing 202 may be at least partially stowed within the vehicle body 108. This means that, in the stowed configuration, at least part of the aerofoil shape of the aerodynamic wing 202 may not be visible from the exterior of the vehicle body 108. In the deployed configuration the aerodynamic wing 202 may be extended outside of the envelope of the vehicle body 108. In other words, in the deployed configuration the wing 202 may protrude 202 outwardly of the vehicle body 108. The entirety of the aerofoil shape of the aerodynamic wing 202 may be visible from the exterior of the vehicle body 108 in the deployed configuration. To move between the stowed configuration and the deployed configuration the aerodynamic wing 202 may be moved distally, or away from the second end 250 of the second actuator 210. The deployed configuration may move the aerodynamic wing 202 rearwardly relative to the body of the vehicle 100. In this configuration, the aerodynamic wing 202 may be deployed rearward whilst remaining relatively low compared to the overall height of the vehicle 100.

The wing 202 may be held in the stowed configuration whilst the vehicle 100 is on an urban road. On an urban road the vehicle 100 may be traveling at low speeds and so airflow around the vehicle 100 may not be sufficient for a deployed wing 202 to provide an aerodynamic effect. The wing 202 may be transitioned to a deployed configuration when it is on a racetrack. On a racetrack it is intended that the vehicle 100 will be moving at high speeds and improved aerodynamic performance that may be provided by the aerodynamic wing 202 is advantageous.

Figure 3 illustrates a stowed configuration of the VAD 200 when it is attached to a vehicle 100. In the stowed configuration, both the first and second actuators are retracted. This means that the first and second actuators are at their minimum level of deployment. The first and second linkages, which are actuated by the actuators, are also retracted. When the first linkage 204 retracted its first end 234, which is coupled to the wing 202, is angled so that its first end 234 is longitudinally proximal of its second end 236 (i.e., closer to the second end 250 of the second actuator 210 along the longitudinal axis y). The distance of the wing 202 from the body of the vehicle 100, in the stowed configuration may be at a minimum. In the stowed configuration, the longitudinal distance between the distal tip 226 of the wing 202 and the second end 236 of the first linkage 204 may be a first distance value d₁.

When the second linkage 208 is retracted, as is illustrated in figure 3, there is an acute angle between the length of the first connecting member 216 and the length of the second connecting member 218. The first connecting member 216 is positioned close to the second end 250 of the second actuator 210. The third connecting member 220, which is coupled to the second connecting member 218, is retracted and so the proximal end 228 of the wing 202 is also positioned close to the second end 250 of the second actuator 210. The difference in height, along the vertical axis z, between the proximal end 228 of the wing 202 and the distal tip 226 of the wing 202 is minimal. Thus, in the retracted configuration 202, the chord line of the wing 202 is orientated substantially parallel to the longitudinal axis y. This means that the pitch angle of the wing 202 is close to zero degrees.

Figure 4 illustrates the VAD 200 in the deployed configuration. This deployed configuration may be referred to as a fully deployed configuration. In other words, in figure 4 the VAD 200 may be deployed as much as is mechanically possible. In the deployed position the aerodynamic wing 202 has been moved distally from its configuration in the retracted position. In other words, the distance between the wing 202 and the second end 250 of the second actuator 210 along the longitudinal axis y is greater in the deployed configuration than it is in the stowed configuration. The distance between the wing 202 and the second end 250 of the second actuator 210 along the vertical axis z is also greater in the deployed configuration than it is in the stowed configuration. In other words, to move between the stowed configuration and the deployed configuration the wing 202 may be moved upwardly and rearwardly. In other words, to move between the stowed configuration and the deployed configuration the wing 202 may be moved rearwardly. In other words, to move between the stowed configuration and the deployed configuration the wing 202 may be moved upwardly and rearwardly. In the deployed configuration, the longitudinal distance between the distal tip 226 of the wing 202 and the second end 236 of the first linkage 204 may be a second distance value d₂. It can be seen from comparison of figures 3 and 4 that d₂ is significantly greater than d₁.

The upward motion of the aerodynamic wing 202 is defined with respect to the vertical axis z, using the second end 250 of the second actuator 210 as a reference point. The rearward motion of the aerodynamic wing 202 is defined with respect to the longitudinal axis y. The wing 202 is moved outwardly and upwardly by the first linkage 204 (and, in turn, the first actuator 206). In the deployed configuration, the first actuator 206 is extended. The first actuator 206 may be described as fully extended. This means that the first actuator 206 may be extended as much as is mechanically possible in the deployed configuration. The extension of the first actuator 206 from a retracted configuration to a deployed configuration imparts motion onto the first linkage 204 so that the first linkage 204 rotates distally of the second actuator. The first linkage 204 may rotate distally about the axis it shares with mounting bracket at its second end. The first linkage 204 is attached to the wing 202 at its first end 234 so, when the first linkage 204 rotates distally, the wing 202 is extended distally along both the z and y axes.

To move between the stowed and the deployed configuration, the second linkage 208 is also rotated both upwardly and outwardly. That is the second linkage 208, to move between the stowed and the deployed configuration, is moved distally along both the z and y axes. The distal rotation of the second linkage 208 may be achieved by two means. Firstly, as the second linkage 208 is coupled to the first linkage 204, distal rotation of the first linkage 204 may cause the second linkage 208 to move distally with the first linkage 204. Secondly, the second actuator 210 may be partially extended to push the connecting members of the second linkage 208 upwardly. In some examples, the second actuator 210 may not extend to transition the VAD 200 between the stowed and deployed configurations.

In figure 4, the second actuator 210 is partially extended to transition the VAD 200 between the stowed and deployed configurations. The partial extension of the second actuator 210 results in a small change in the pitch angle of the aerodynamic wing 202. The second actuator 210 is extended less than the first actuator 206 in the deployed configuration, and so the first linkage 204 has a greater effect on the overall configuration of the wing 202 than the second linkage 208. More specifically, the first linkage 204 pushes the distal tip 226 of the wing 202 upwards so that the angle between the chord line of the wing 202 and the longitudinal axis y is increased. Thus, the angle of attack of the wing 202 is non-zero.

In the deployed configuration, the aerodynamic wing 202 separates the airflow that extends outwardly from the vehicle 100 into an area of high-speed, low-pressure airflow that passes below the wing 202 and an area of low speed, high pressure airflow above the wing 202. The low-pressure airflow on the underside of wing 202 allows the high-pressure airflow to push down on the wing 202, producing a downforce. The downforce increases grip of the vehicle 100 wheels on the road, thereby improving traction and the overall performance of the vehicle 100.

Figures 3 and 4 may illustrate the minimum (d₁) and maximum (d₂) distances, respectfully, that the wing 202 of the VAD 200 can be moved along the longitudinal axis y. However, it may be appreciated that the arrangement illustrated in these figures may provide for alternative configurations of the wing 202 that achieve a longitudinal distance of any value between d₁ and d₂.

For any longitudinal distance value dₓ, the pitch angle of the wing 202 may be varied to change the effect of the VAD 200 on the aerodynamic performance of a vehicle 100. The configurations of the VAD 200 that vary the pitch angle of the device may be referred to as further configurations of the VAD 200. A first further configuration of the VAD 200 is illustrated in figure 5. In the first further configuration, the aerodynamic wing 202 is configured to reduce the drag force experienced by the vehicle 100 and thereby increase the vehicle's acceleration.

In the first further configuration the first actuator 206 is at least partially extended. The first actuator 206 is extended further than in the stowed configuration of figure 3. This means that the aerodynamic wing 202 is at least partially deployed. In other words, the aerodynamic wing 202 in figure 5 has been extended at least partially outwardly of the body of the vehicle 100. The extension of the first actuator 206 in the first further configuration may be the same as its extension in the deployed configuration of figure 4. Thus, the configuration of the first linkage 204 in the first further configuration may also be the same as its configuration in the deployed configuration of figure 4. That means that the longitudinal distance d₂ between the distal tip 226 of the wing 202 and the second end of the first linkage 204 may be the same in the first further configuration as it is in the deployed configuration of figure 4.

In the first further configuration, the second actuator 210 is at least partially extended. The second actuator 210 may be extended to substantially the same extent as the first actuator 206. That is, in the second further configuration, the degree of extension of the second actuator 210 may be between 60-100% of the degree of extension of the first actuator 206. The degree of extension of the second actuator 210 may be between 80-90% of the degree of extension of the first actuator 206. The second actuator 210 may be extended further in the first further configuration than it is in the deployed configuration of figure 4. The extension of the second actuator 210 changes the configuration of second linkage 208. More specifically, the extension of the second actuator 210 causes the second connecting member 218 of the second linkage 208 to move upwardly. In other words, the second connecting member 218 is moved distally along the vertical axis z. As it is extended, the second actuator 210 causes the second connecting member 218 to rotate distally about its shared axis with the second actuator 210. The second connecting member 218 may be rotated such that, in the first further configuration, it is coincident (or axially aligned) with the second actuator 210.

The first connecting member 216 is pivotally connected to both the second connecting member 218 and the first linkage 204. Thus, if the first actuator 206 (and therefore the first linkage 204) remains static whilst the second actuator 210 is extended, then the first connecting member 216 is caused to rotate distally about its shared axis with the second connecting member 218. The third connecting member 220, which is coupled to the first connecting member 216, moves upwardly with the first connecting member 216 as the first connecting member 216 is rotated distally. The third connecting member 220, in the first further configuration, may be coincident (or axially aligned) with the second connecting member 218. Thus, the third connecting member 220, in the first further configuration, may be coincident (or axially aligned) with the second actuator 210. The third connecting member 220 is connected to the proximal end 228, or leading edge, of the aerodynamic wing 202. Thus, as it is moved upwardly, the third connecting member 220 may lift the proximal end 228 of wing 202 upwards.

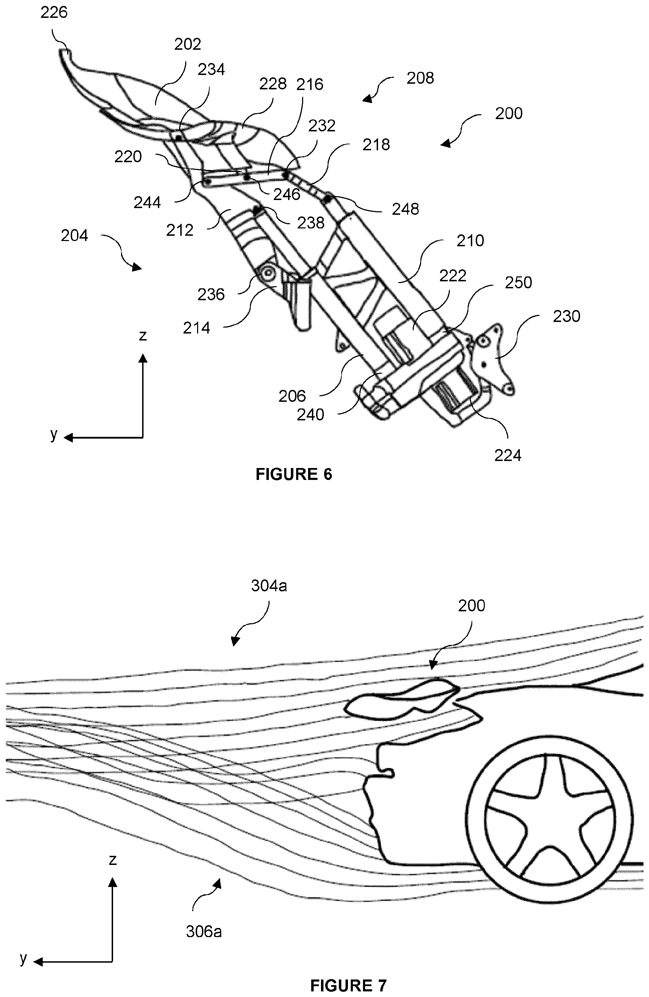

As the configuration of the first linkage 204 may remain static as the VAD 200 is moved between the deployed configuration of figure 4 and the first further configuration of figure 5, the distance of the distal tip 226 of the wing 202 along the vertical axis z may not vary between the two configurations. Thus, as the third connecting member 220 lifts the proximal end 228 of wing 202 upwards, the vertical distance between the distal and proximal ends of the wing 202 may decrease. This means that the angle of the wing 202 with respect to the longitudinal axis y is reduced. Thus, in the first further configuration, the pitch angle of the wing 202 is zero, or close to zero such at -5 degrees. The pitch angle of the wing 202 may be between -10 and 30 degrees. The pitch angle of the wing 202 may be between -5 and 24 degrees. The zero, or close to zero such as -5 degrees, pitch angle of the wing 202 means that the wing 202 can extend the flow of air passing over upper surfaces of the vehicle 100 such as the roof of the vehicle 100. This effect is illustrated in figure 7, in which airflow 304a passing over the roof of the vehicle 100 is extended. Airflow 306a passing underneath the vehicle 100 is also extended. This reduces the drag forces generated by the wing resulting in improved aerodynamics. More specifically, the acceleration of the vehicle 100 can be improved by a reduced drag coefficient.

A second further configuration of the VAD 200 is illustrated in figure 6. In the second further configuration, the aerodynamic wing 202 is configured to reduce increase downforce experienced by the vehicle 100, especially at the rear of the vehicle and thereby increase braking performance of the vehicle. The second further configuration also increases the drag force acting on the vehicle 100 by the decelerating the flow of air over the roof of the vehicle 100, thereby improving the deceleration of the vehicle 100 during braking. The increased drag is a secondary consideration to the improved braking performance to the increased downforce that is generated during the second further configuration of the VAD 200. As with the first further configuration, in the second further configuration the first actuator 206 is extended further than in the stowed configuration of figure 3. This means that the aerodynamic wing 202 is at least partially deployed. In other words, the aerodynamic wing 202 in figure 6 has been extended at least partially outwardly of the body of the vehicle 100. The extension of the first actuator 206 in the first further configuration may be the same as its extension in the deployed configuration of figure 4. Thus, the configuration of the first linkage 204 in the first further configuration may also be the same as its configuration in the deployed configuration of figure 4. That means that the longitudinal distance d₂ between the distal tip 226 of the wing 202 and the second end 236 of the first linkage 204 may be the same in the second further configuration as it is in the deployed configuration of figure 4.

To transition from to the second further configuration from either the deployed configuration or the first further configuration, the second actuator 210 may be retracted. The second actuator 210 may be retracted so that it is less extended than the first actuator 206. In the second further configuration, the degree of extension of the second actuator 210 may be between 10-50% of the degree of extension of the first actuator 206. The degree of extension of the second actuator 210 may be between 20-40% of the degree of extension of the first actuator 206. The retraction of the second actuator 210, between the deployed/first further configuration and the second further configuration changes the configuration of the second linkage 208. More specifically, the second connecting member 218 of the second linkage 208 is moved downwardly with the second actuator 210. This causes the second connecting member 218 to rotate about its shared axis with the second actuator 210 so that it is angled, with respect to the second actuator 210, towards the distal tip 226 of the wing 202.

If the first actuator 206 (and therefore the first linkage 204) remains static whilst the second actuator 210 is retracted, then the first connecting member 216 is caused to rotate distally about its shared axis with the second connecting member 218. The configuration of the first connecting member 216 in the second further configuration may be more distal than the configuration of the first connecting member 216 in the first further configuration. The third connecting member 220, which is connected to the first connecting member 216, is moved proximally (or downwardly) with the first connecting member 216 as the first connecting member 216 is rotated distally. The angle between the third connecting member 220 and the vertical may be smaller in the second further configuration than it is in the first further configuration. As the third connecting member 220 is connected to the proximal end 228 of the wing 202, the downward movement of the third connecting member 220 may lower the proximal end 228 of the wing 202.

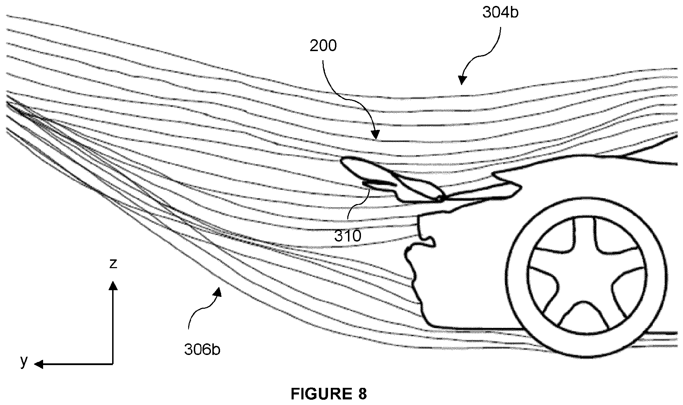

As the configuration of the first linkage 204 may remain static as the VAD 200 is moved between the deployed configuration and the second further configuration, the distance of the distal tip 226 of the wing 202 along the vertical axis z may not vary between the two configurations. Thus, as the third connecting member 220 lowers the proximal end 228 of wing 202 downwards, the vertical distance between the distal and proximal ends of the wing 202 may increase. This means that the angle of the wing 202 with respect to the longitudinal axis y is increased. Thus, in the first further configuration, the pitch angle of the wing 202 is substantially greater than zero. The chord line of the wing 202 may be at a diagonal to the longitudinal axis y. In one example, the pitch angle of the wing 202 in the second further configuration may be between 20 and 30 degrees. The pitch angle of the wing 202 in the second further configuration may be 24 degrees. The significant pitch angle of the wing 202 means that the wing 202 generates significant levels of downforce in this configuration. The wing 202 is below the stall angle of the wing 202. Therefore, the flow across the wing is fully attached to the surfaces of the wing 202 in this configuration. This causes the significant level of downforce. The second further configuration generates increased downforce relative to the stowed, deployed and first further configurations. The increased level of downforce generated by the wing 202 in the second further configuration produces increased levels of induced drag. The direction of the airflow of the wing is illustrated in figure 8, where air 304b passing over an upper surface of the vehicle 100 is disrupted by the VAD 200 and is forced upwardly generating additional levels of downforce. The increase in downforce that is generated by use of the wing 202 in the second further configuration enables enhanced manoeuvrability during braking of the vehicle 100. Thus, in the second further configuration, the wing 202 may be referred to as an airbrake.

Figures 5 and 6 illustrate two examples of configurations of the VAD 200 that change the pitch angle of the aerodynamic wing 202. However, it may be appreciated that the arrangement illustrated in these figures may provide for alternative configurations of the wing 202 that achieve any alterative value of pitch angle.

The degree of deployment of the aerodynamic wing 202 of the VAD 200 can be varied by extension and retraction of the first linkage 204 and, in turn, the first actuator 206. The pitch angle of the wing 202 can be varied by varying the extension of the first and second actuators. More specifically, the pitch angle can be varied by varying difference in extension between the second actuator 210 and the first actuator 206. For example, to achieve the drag reducing effect of the first further configuration in figure 5, the first and second actuators are extended so that the difference between the extension of these two actuators is low. To achieve the airbrake effect of the second further configuration in figure 6, the second actuator 210 is retracted with respect to the first actuator 206 so that the difference between the extension of the two actuators is high. Thus, the VAD 200 provides a simple mechanism that allows the adaptation of both the degree of deployment and the pitch angle of the wing 202. The degree of deployment and pitch angle of the wing 202 can be varied together, without the need for independent control systems.

The VAD 200 may comprise a second bracket 230 located at its proximal end 228. The second bracket 230 may be configured to attach to a location on the body of a vehicle 100. The second bracket 230 may be configured to couple at one end to the body of the vehicle 100. The coupling of the second bracket 230 to the body of the vehicle 100 may be fixed. The second bracket 230 may also be pivotally coupled to the first and second actuators. This coupling may be ensured by a mounting plate to which both the first and second actuators are secured. The second bracket 230 may be configured to allow the VAD 200 to rotate about the vehicle body 108. The second bracket 230 may be coupled to the VAD 200 so that, when the first linkage 204 rotates about the first bracket 214, the proximal end 228 of the VAD 200 rotates around the second bracket 230. Thus, the presence of the second bracket 230 allows rotation of the VAD 200 about the first bracket 214 to be mimicked about the second bracket 230.

The first and second actuators may be linear actuators. The actuators may be hydraulic rams. The actuators may be electric linear actuators. The actuators may comprise an actuator body and an actuator rod. For each actuator, actuator rod is moveable along actuator body to enable the length of the actuator to vary. Thus, the length of the actuator increases as it moves from a retracted configuration to an extended configuration. The actuator rod can apply force to a body, such as a connecting structure of the first or second linkage 208, that is either in contact with the actuator rod or connected to it. The actuator body is mounted to part of the vehicle body 108.

The drive source that drives the first actuator 206 may be a first motor 222. The drive source that drives the second actuator 210 may be the first motor 222. In other words, the first and second actuators may be driven by the same motor. In an alternative example, the second actuator 210 may be driven by a second motor 224. In this example, the first and second actuators may be independently driven. The independent driving of the first and second actuators may allow for the independent adjustment of different ends of the aerodynamic wing 202. The first and second motors may be linked together by a common control unit which controls the movement of each actuator. The control unit may be a discrete unit or may be part of a more general vehicle 100 management system.

The first and second motors may be driven by a Controller Area Network (CAN) bus. The CAN bus is a software communication channel designed to allow processors on the vehicle 100 to communicate with each other. Thus, the CAN bus connects different vehicle 100 components together. The CAN bus may connect the first and second motors of the VAD 200 to the dashboard of the vehicle 100. The CAN bus may alternatively or additionally connect the first and second motors to components of the vehicle 100 that receive driver input, such as the brake pedal of the vehicle 100. The CAN bus may connect the first and second motors to any alternative or additional components of the vehicle 100. The components of the vehicle 100 may be sensors recording one or more driving conditions for the vehicle 100. The first and second motors may be connected to any combination of the user input components and sensors without the presence of a CAN bus. By virtue of being connected to the vehicle's user input components and/or sensors, the motors may obtain commands relating to the configuration of the VAD 200. For example, the motors may receive a command from the driver of the vehicle 100 to adjust the distance and/or the pitch angle of the aerodynamic wing 202. The command may be a direct command from the driver to adjust the wing 202 or may be a derived command based on desired driving conditions. For example, the derived command may be based on the commanded speed of the vehicle 100, whether the brakes of the vehicle 100 have been applied, or if a particular dynamic mode has been selected for the vehicle 100. The motors may receive commands from the driver via either wired or wireless means.

As mentioned above, the aerodynamic wing 202 may have a width that extends along an axis that is transverse to both the longitudinal axis y and the vertical axis z. The first and second linkages 204, 208 may be located along a first side of the width of the aerodynamic wing 202 along its width. The first and second actuators may therefore also be located at the first side of the aerodynamic wing 202 along its width.

The VAD 200 may further comprise a second set of actuators and a second set of linkages for coupling to a second side along the width of the wing 202. The first and second sides of the wing may be defined by a line that bisects the wing along the longitudinal axis y. The first side of the wing may be located on one side of the line. The second side of the wing may be located on the other side of the line. The first sets of actuators and linkages may be spaced apart from the second sets of actuators and linkages across the width of the vehicle.

The second set of linkages of the VAD 200 may comprise a third linkage that may be pivotally coupled to a second side along the width of the wing 202. The third linkage may be pivotally coupled to the aerodynamic wing 202 at its first end and to the vehicle body 108 at its second end. The third linkage may comprise the same connecting elements as the first linkage 204 of the VAD 200. That is, the third linkage may also comprise a wing support 212 and a mounting bracket. The VAD 200 may further comprise a third actuator connected to the third linkage at a first end and to the vehicle body 108 at a second end. The third actuator may be configured to actuate the third linkage to move the aerodynamic wing 202 over a range of distances relative to the vehicle body 108.

The second set of linkages of the VAD 200 may further comprise a fourth linkage that may be pivotally coupled to a second side along the width of the wing 202. The fourth linkage may be pivotally coupled to the aerodynamic wing 202 at a first end of the fourth linkage, and to the third linkage 204 at a second end of the fourth linkage. The VAD 200 may further comprise a fourth actuator connected to the fourth linkage so that, for any distance within the range of distances, the fourth actuator can actuate the fourth linkage so that the pitch angle of the aerodynamic wing 202 can be varied. In other words, the function of the fourth actuator may be the same as the function of the second actuator 210 at a second side along the width of the wing 202.

The third actuator may be synchronised with the first actuator 206. The fourth actuator may be synchronised with the second actuator 210. This means that the third linkage may be synchronised with the first linkage 204 and the fourth linkage may be synchronised with the second linkage 208. Thus, both ends of the aerodynamic wing 202, along its width, may be actuated in synchronisation. The movement of the wing 202 may therefore be uniform across its width.

The third actuator may be driven by a third motor. The fourth actuator may be driven by a fourth motor. Thus, the second set of actuators (comprising the third and fourth actuators) may be driven independently of the first set of actuators (comprising the first and second actuators). The independent driving of the first and second sets of actuators is advantageous as it allows for isolation and correction of inconsistencies in the actuation of the VAD 200 mechanisms. The independent driving of the two sets of actuators also allows for the software-led synchronisation of motor movement on either side of the width of the aerodynamic wing 202. The VAD 200 may comprise a first control unit for controlling the first and second actuators. The VAD 200 may further comprise a second control unit configured to control the movement of the third and fourth actuators. Thus, each side of the VAD 200 may be controlled independently. This is advantageous as it allows the control units to adjust for discrepancies between the first and second ends of the width of the aerodynamic wing 202. In an alternative example, the first, second, third and fourth actuators may be controlled by the same control unit.

As mentioned above, the VAD 200 of figures 3-6 may be attached to the body of a vehicle 100 that comprises a rear diffuser. The VAD 200 comprises an aerodynamic wing 202 with at least one aerodynamic surface. The aerodynamic surface of the wing 202 may be an upper surface of the wing 202. The aerodynamic surface of the wing 202 may be a lower surface of the wing 202. The aerodynamic surface may be a smooth curved surface that provides a laminar flow of air as the air passes over that surface.

The aerodynamic wing 202 may move between a stowed and deployed configuration. That is, the aerodynamic wing 202 is configured to move between a first configuration in which at least part of the shape of the aerodynamic wing 202 may not be visible from the exterior of the vehicle body 108 and a second configuration in which the wing 202 may protrude 202 outwardly of the vehicle body 108.

The rear diffuser is used to decelerate and expand airflow that emerges from underneath the vehicle which increases the downforce generated by the vehicle 100. The aerodynamic surface of the VAD is configured to extend the flow of air that extends outwardly from underneath the rear diffuser. More specifically, the aerodynamic wing 202 of the VAD may comprise a lower aerodynamic surface 310 that provides this extension of the underbody airflow in a rearward direction. The surface 310 may provide this extension when the wing 202 is in the deployed configuration. In the deployed configuration, as illustrated in figure 8, the wing 202 is orientated at an angle with respect to the longitudinal axis y. The angle between the chord line of the wing 202 and the longitudinal axis y may be between -5 and 24 degrees. In the deployed configuration, air 206b flowing out from underneath the rear diffuser is guided by the lower aerodynamic surface 310 of the wing 202. The path of air extending outwardly from the rear diffuser follows a smooth path upwardly as it moves rearwardly. The path of air may extend diagonally upwards as it passes underneath the wing 202. The aerodynamic surface 310 of the wing 202 may complement the path of air as it extends upwardly out of the rear diffuser. The complementary airflow from the rear wing 202 relative to the airflow from the diffuser permits an increase in the downforce generated by the vehicle 100 as the airflow 306b originating from the rear diffuser has a less disrupted path as the airflow from the rear wing is also directed upwards. This enhances the flow of air from underneath the vehicle 100.

The VAD 200 may be configurable in dependence on one or more driving conditions of the vehicle 100. That is, the pitch angle of the aerodynamic wing 202 and the distance of the wing 202 from the body of the vehicle 100 may be varied in dependence on one or more driving conditions for the vehicle 100. The driving conditions of the vehicle 100 may be determined from driver input, via for example a button on the control panel of the vehicle 100 or the driver applying a force to the brake pedal. The driving conditions of the vehicle 100 may alternatively be determined from sensor measurements, such as wheel speed sensors or GPS indicating the location of the vehicle 100 (e.g., whether the vehicle 100 is on a racetrack). The driving conditions of the vehicle 100 may be determined using a combination of driver and sensor input. As described above, the CAN bus may be used to direct user and/or sensor input to the VAD 200. Exemplary driving conditions that may be sensed for the vehicle 100 are the speed of the vehicle 100, the location of the vehicle 100 (e.g., whether it is on a racetrack) and whether the vehicle 100 has been put into a particular driving mode (e.g., sports mode, off-road mode). The configuration of the VAD 200 in dependence on the driving conditions of the vehicle 100 allows for the VAD 200 to be adapted automatically to suit the user's desired conditions. The driving conditions of the vehicle may include when the vehicle is driven at a speed below a threshold speed for at least a threshold period of time. The driving conditions of the vehicle may include when a temperature sensor on the wing 202 records a temperature above a threshold temperature. As the wing 202 extends rearwardly whilst in the deployed configuration, hot exhaust gases may impinge on the wing 202. When the vehicle 100 is travelling with sufficient speed to cool the wing this is not an issue. However, when the vehicle 100 is travelling slowly for a duration of time then the wing 202 may heat up. Therefore, when the wing is in the deployed configuration the wing may be retracted to the stowed configuration in response to driving conditions of the vehicle 100. When the wing is in the deployed configuration, the wing may be retracted to the stowed configuration in response to when the vehicle is driven at a speed below a threshold speed for at least a threshold period of time. When the wing is in the deployed configuration, the wing may be retracted to the stowed configuration in response to a temperature sensor on the wing 202 recording a temperature above a threshold temperature.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description, it will be evident to a person skilled in the art that various modifications may be made within the scope of the invention.

### ANNEX TO THE DESCRIPTION

1. A variable aerodynamic device for attachment to a vehicle body, the device comprising:
   an aerodynamic wing configured to extend from a rear surface of the vehicle body;
   a first linkage pivotally coupled to the aerodynamic wing at a first end and configured to be coupled to the vehicle body at a second end;
   a first actuator connected to the first linkage at a first end and configured to be coupled to the vehicle body at a second end, the first actuator being configured to actuate the first linkage to move the aerodynamic wing over a range of distances relative to the vehicle body;
   a second linkage pivotally coupled to the aerodynamic wing at a first end and to the first linkage at a second end; and
   a second actuator connected to the second linkage at a third end of the second linkage so that, for any distance within the range of distances, the second actuator can actuate the second linkage so that a pitch angle of the aerodynamic wing can be varied.
2. The device of 1 wherein the aerodynamic wing comprises an upwardly facing aerodynamic surface configured to direct the flow of air as it passes the rear of the vehicle.
3. The device of 1 or 2, wherein the aerodynamic wing comprises a distal tip, and wherein the first linkage is connected to the aerodynamic wing at a location that is closer to the distal tip than the location at which the second linkage is connected to the distal tip.
4. The device of any of 1 to 3, wherein the first linkage comprises a wing support configured to be connected to the body of the vehicle at a first connection point, to a lower surface of the aerodynamic wing at a second connection point, and to the first actuator at a third connection point.
5. The device of 4, wherein the wing support is configured to be connected to the vehicle body at the first end by a first bracket.
6. The device of 4 or 5, wherein the second linkage comprises:
   a first connecting member pivotally connected to the wing support at a first end;
   a second connecting member pivotally connected to the first connecting member at a first end, and pivotally connected to the second actuator at a second end; and
   a third connecting member pivotally connected to the first connecting member at a first end, and to a lower surface of the aerodynamic wing at a second end.
7. The device of 6, wherein the first, second and third members are struts.
8. The device of 6 or 7 when dependent on 4, wherein the first connecting member is connected to the wing support at a position along the length of the wing support that is located between the second connection point and the third connection point.
9. The device of any of 1 to 8, wherein the aerodynamic wing is moveable away from the second actuator to transition between a stowed configuration and a deployed configuration.
10. The device of 9 wherein, to move between the stowed configuration and the deployed configuration, the first linkage rotates distally of the second actuator.
11. The device of 9 or 10, wherein the aerodynamic wing is further moveable to a first further configuration and wherein, in the first further configuration, the aerodynamic wing is configured to extend the flow of air passing over upper surfaces of the vehicle.
12. The device of 11 wherein, to move between the deployed configuration and the first further configuration, the second actuator is extended.
13. The device of any of 10 to 12, wherein the aerodynamic wing is further movable to a second further configuration and wherein, in the second further configuration, the aerodynamic wing is configured to divide the flow of air passing over upper surfaces of the vehicle.
14. The device of 13 wherein, to move between the deployed configuration and the second further configuration, the second actuator is retracted.
15. The device of any of 1 to 14, further comprising a second bracket configured to allow the variable aerodynamic device to rotate relative to the vehicle body.
16. The device of any of 1 to 15 wherein the aerodynamic wing has a width that extends along its axis of rotation, and wherein the first and second linkages are located at a first end of the aerodynamic wing along its width, the device further comprising:
   a third linkage pivotally coupled to a second end along the width of the aerodynamic wing at a first end and to the vehicle body at a second end; and
   a third actuator connected to the third linkage at a first end and to the vehicle body at a second end, the third actuator being configured to actuate the third linkage to move the aerodynamic wing over a range of distances relative to the vehicle body;
   a fourth linkage pivotally coupled to a second end along the width of the aerodynamic wing at a first end and to the third linkage at a second end; and
   a fourth actuator connected to the second linkage at a third end so that, for any distance within the range of distances, the fourth actuator can actuate the fourth linkage so that the pitch angle of the aerodynamic wing can be varied.
17. The device of 16, further comprising a first control unit configured to control the first and second actuators and a second control unit configured to control the movement of the third and fourth actuators.
18. The device of any of 1 to 17, wherein the first and second actuators are hydraulic rams.
19. The device of any of 1 to 18, wherein the first actuator is driven by a first motor and the second actuator is driven by a second motor.
20. The device of any of 1 to 19 when dependent on 16, wherein the third actuator is driven by a third motor and the fourth actuator is driven by a fourth motor.
21. The device of 19, wherein the first and second motors are driven by a Controller Area Network (CAN) bus.
22. A vehicle comprising the device of any of 1 to 21.
23. A vehicle comprising:
   a rear diffuser; and
   an aerodynamic wing with an aerodynamic surface, the aerodynamic wing being configured to move between a stowed and deployed configuration;
   wherein the aerodynamic wing comprises a lower aerodynamic surface that is configured to extend a continuous flow of air outwardly from underneath the rear diffuser.
24. The vehicle of 23 wherein, to move between the stowed and the deployed configuration, the aerodynamic wing is moved rearwardly with respect to the body of the vehicle.
25. The vehicle of 23 or 24 wherein, to move between the stowed and the deployed configuration, the aerodynamic wing is moved upwardly with respect to the body of the vehicle.
26. The device or vehicle of any of 1 to 25, wherein the pitch of the aerodynamic wing, and the distance between the aerodynamic wing and the vehicle body, are varied in dependence on one or more driving conditions for the vehicle.

## Claims

1. A variable aerodynamic device for attachment to a vehicle body, the device comprising:
an aerodynamic wing configured to extend from a rear surface of the vehicle body;
a first linkage pivotally coupled to the aerodynamic wing at a first end and configured to be coupled to the vehicle body at a second end;
a first actuator connected to the first linkage at a first end and configured to be coupled to the vehicle body at a second end, the first actuator being configured to actuate the first linkage to move the aerodynamic wing over a range of distances relative to the vehicle body;
a second linkage pivotally coupled to the aerodynamic wing at a first end and to the first linkage at a second end; and
a second actuator connected to the second linkage at a third end of the second linkage so that, for any distance within the range of distances, the second actuator can actuate the second linkage so that a pitch angle of the aerodynamic wing can be varied.

2. The device of claim 1 wherein the aerodynamic wing comprises an upwardly facing aerodynamic surface configured to direct the flow of air as it passes the rear of the vehicle.

3. The device of claim 1 or claim 2, wherein the aerodynamic wing comprises a distal tip, and wherein the first linkage is connected to the aerodynamic wing at a location that is closer to the distal tip than the location at which the second linkage is connected to the distal tip.

4. The device of any preceding claim, wherein the first linkage comprises a wing support configured to be connected to the body of the vehicle at a first connection point, to a lower surface of the aerodynamic wing at a second connection point, and to the first actuator at a third connection point.

5. The device of claim 4, wherein the second linkage comprises:
a first connecting member pivotally connected to the wing support at a first end;
a second connecting member pivotally connected to the first connecting member at a first end, and pivotally connected to the second actuator at a second end;
and
a third connecting member pivotally connected to the first connecting member at a first end, and to a lower surface of the aerodynamic wing at a second end.

6. The device of claim 5 , wherein the first connecting member is connected to the wing support at a position along the length of the wing support that is located between the second connection point and the third connection point.

7. The device of any preceding claim, wherein the aerodynamic wing is moveable away from the second actuator to transition between a stowed configuration and a deployed configuration.

8. The device of claim 7 wherein, to move between the stowed configuration and the deployed configuration, the first linkage rotates distally of the second actuator.

9. The device of claim 7 or claim 8, wherein the aerodynamic wing is further moveable to a first further configuration and wherein, in the first further configuration, the aerodynamic wing is configured to extend the flow of air passing over upper surfaces of the vehicle, and optionally wherein, to move between the deployed configuration and the first further configuration, the second actuator is extended.

10. The device of claims 8 or claim 9, wherein the aerodynamic wing is further movable to a second further configuration and wherein, in the second further configuration, the aerodynamic wing is configured to divide the flow of air passing over upper surfaces of the vehicle, and optionally wherein, to move between the deployed configuration and the second further configuration, the second actuator is retracted.

11. The device of any preceding claim, further comprising a second bracket configured to allow the variable aerodynamic device to rotate relative to the vehicle body.

12. The device of any preceding claim wherein the aerodynamic wing has a width that extends along its axis of rotation, and wherein the first and second linkages are located at a first end of the aerodynamic wing along its width, the device further comprising:
a third linkage pivotally coupled to a second end along the width of the aerodynamic wing at a first end and to the vehicle body at a second end; and
a third actuator connected to the third linkage at a first end and to the vehicle body at a second end, the third actuator being configured to actuate the third linkage to move the aerodynamic wing over a range of distances relative to the vehicle body;
a fourth linkage pivotally coupled to a second end along the width of the aerodynamic wing at a first end and to the third linkage at a second end; and
a fourth actuator connected to the second linkage at a third end so that, for any distance within the range of distances, the fourth actuator can actuate the fourth linkage so that the pitch angle of the aerodynamic wing can be varied.

13. The device of claim 12, further comprising a first control unit configured to control the first and second actuators and a second control unit configured to control the movement of the third and fourth actuators.

14. The device of any preceding claim, wherein the first and second actuators are hydraulic rams.

15. The device of any preceding claim, wherein the pitch of the aerodynamic wing, and the distance between the aerodynamic wing and the vehicle body, are varied in dependence on one or more driving conditions for the vehicle.
